# DEMANDE DE BREVET EUROPEEN

(11) **EP 4 830 962 A1**
(43) Date de publication de la demande: **28.10.2026**
(21) Numéro de dépôt: 26173685.4
(22) Date de dépôt: 21.04.2026
(51) Int. Cl.: B60K 1/04

(54) **AGENCEMENT POUR VÉHICULE, VÉHICULE AVEC UN TEL AGENCEMENT ET PROCÉDÉ ASSOCIÉ DE FIXATION ET DE MISE À LA MASSE D'UNE BATTERIE DE TRACTION DANS UN VÉHICULE**

(30) Priorité: 22.04.2025 FR 2504244
(71) Demandeur: Flexis, 92100 Boulogne Billancourt (FR)
(72) Inventeur: MICHAUD, Guillaume, 78280 GUYANCOURT (FR)
(74) Mandataire: Lavoix

(57) **Abrégé**

La présente invention concerne un agencement pour véhicule comprenant :
- une batterie de traction comprenant un carter métallique, le carter comprenant un premier orifice de fixation (42),
- un élément structurel comprenant un deuxième orifice de fixation, l'élément structurel étant métallique et revêtu par une couche de revêtement, et
- un boulon (28) de fixation et de mise à la masse de la batterie de traction, le boulon (28) comprenant :
- un écrou (56) ayant été soudé sur l'élément structurel préalablement à l'application de la couche de revêtement, et
- un vis (58) comprenant une tête (70) et une tige (68) comprenant une portion de fixation (74) et une portion de nettoyage (76),

la portion de nettoyage (76) comprenant au moins deux rainures (80) définies axialement.

## Description

La présente invention concerne la fixation et la mise à la masse d'une batterie de traction dans un véhicule. En particulier, la présente invention porte sur un agencement pour véhicule et sur un véhicule comprenant un tel agencement. Par ailleurs, la présente invention concerne également un procédé de fixation et de mise à la masse d'une batterie de traction dans un véhicule.

La mise à la masse d'une batterie de traction est essentielle pour assurer le bon fonctionnement et la sécurité d'un véhicule, notamment électrique, alimenté par cette batterie.

Par « mise à la masse », on entend ici la définition d'une connexion électrique de la batterie de traction à un potentiel de référence.

A cet effet, il est connu d'arranger au moins un câble de masse reliant la batterie de traction à une pièce de la caisse ou de la carrosserie.

Un tel câble de masse comprend généralement une surlongueur afin d'éviter une rupture de celui-ci en cas de choc accidentel, par exemple frontal, latéral ou arrière. Cette surlongeur permet ainsi d'assurer une continuité électrique entre la caisse et la batterie de traction garantissant ainsi la sécurité.

Toutefois, cette solution n'est pas entièrement satisfaisante.

En effet, de tel câble de masse présente une section très importante, notamment d'environ 30 mm². La surlongueur ajoutée pour des raisons de sécurité entraine donc un surcoût non négligeable.

Par ailleurs, l'assemblage d'un tel câble de mise à la masse est généralement peu ergonomique, puisque celui-ci doit être réalisé en sous caisse.

Un des buts de l'invention est alors de pallier ces inconvénients, et en particulier de proposer un moyen de mise à la masse électrique d'une batterie de traction, qui soit économique, fiable et facile à assembler.

A cet effet, l'invention a pour objet un agencement pour véhicule, notamment pour véhicule automobile et en particulier électrique, comprenant :
- une batterie de traction comprenant un carter métallique, le carter comprenant au moins un premier orifice de fixation centré sur un axe de fixation ;
- un élément structurel comprenant au moins un deuxième orifice de fixation centré sur un axe d'orifice confondu avec l'axe de fixation correspondant, l'élément structurel étant métallique et revêtu par une couche de revêtement, en particulier une couche de peinture, et
- au moins un boulon de fixation et de mise à la masse de la batterie de traction, le boulon comprenant :
   - un écrou centré sur l'axe de fixation correspondant et ayant été soudé sur l'élément structurel préalablement à l'application de la couche de revêtement, et
   - un vis comprenant une tête et une tige s'étendant selon un axe de tige confondu avec l'axe de fixation, la tige comprenant une portion de fixation et une portion de nettoyage,

la portion de fixation de la tige s'étendant selon l'axe de tige entre la tête et la portion de nettoyage,
la portion de nettoyage comprenant au moins deux rainures définies axialement selon l'axe de tige.

Suivant d'autres aspects avantageux de l'invention, l'agencement comprend une ou plusieurs des caractéristiques suivantes, prises isolément ou suivant toutes les combinaisons techniquement possibles :
- Le carter comprend un côté droit et un côté gauche opposés selon une direction transversale, le carter comprenant au moins deux premiers orifices de fixation par côté, et de préférence au moins cinq premiers orifices de fixation par côté, chaque premier orifice de fixation définissant un axe de fixation correspondant, en particulier perpendiculaire à la direction transversale,

l'élément structurel comprenant un deuxième orifice de fixation correspondant pour chacun des premiers orifices de fixation,
l'agencement comprenant un boulon correspondant pour chaque premier orifice de fixation.
   - La ou chaque vis est revêtue par un revêtement conducteur.
   - Les rainures de la portion de nettoyage sont rectilignes et notamment s'étendent parallèlement à l'axe de tige.
   - La ou chaque portion de nettoyage comprend au moins quatre rainures, de préférence reparties de manière circulaire uniforme autour de l'axe de tige.
   - La ou chaque vis est une vis de dimension M10 à M14.

L'invention concerne également un véhicule, notamment véhicule automobile et en particulier véhicule électrique, comprenant un agencement tel que décrit ci-dessus.

L'invention concerne également un procédé de fixation et de mise à la masse d'une batterie de traction dans un véhicule, le procédé comprenant les étapes suivantes :
a. fourniture d'une batterie de traction comprenant un carter métallique, le carter comprenant au moins un premier orifice de fixation centré sur un axe de fixation,
b. fourniture d'un élément structurel comprenant au moins un deuxième orifice de fixation centré sur un axe d'orifice, l'élément structurel étant métallique,
c. fourniture d'au moins un boulon comprenant un écrou et une vis, la vis comprenant une tige s'étendant selon un axe de tige et comprenant une portion de fixation et une portion de nettoyage comprenant au moins deux rainures définies axialement selon l'axe de tige,
d. soudure de l'écrou sur l'élément structurel de sorte à centrer celui-ci sur l'axe d'orifice du deuxième orifice de fixation correspondant,
e. application de la couche de revêtement, en particulier une couche de peinture, sur l'élément structurel et l'écrou,
f. agencement du carter de sorte que l'axe de fixation du ou de chaque premier orifice de fixation soit confondu avec l'axe d'orifice du deuxième orifice de fixation correspondant de l'élément structurel, et
g. vissage de la ou chaque vis dans l'écrou correspondant.

Suivant d'autres aspects avantageux de l'invention, le procédé comprend une ou plusieurs des caractéristiques suivantes, prises isolément ou suivant toutes les combinaisons techniquement possibles :
- L'étape e) est réalisée par cataphorèse.
- L'étape d) est réalisée par soudure par résistance.

L'invention apparaîtra plus clairement à la lecture de la description qui va suivre, donnée uniquement à titre d'exemple non limitatif, et faite en référence aux dessins dans lesquels :
La Figure 1 est une vue schématique d'un véhicule selon l'invention,
La Figure 2 est une vue schématique d'un agencement selon l'invention,
La Figure 3 est une vue en perspective d'une zone A de l'agencement de la Figure 2, et
La Figure 4 est une vue en coupe de la Figure 3.

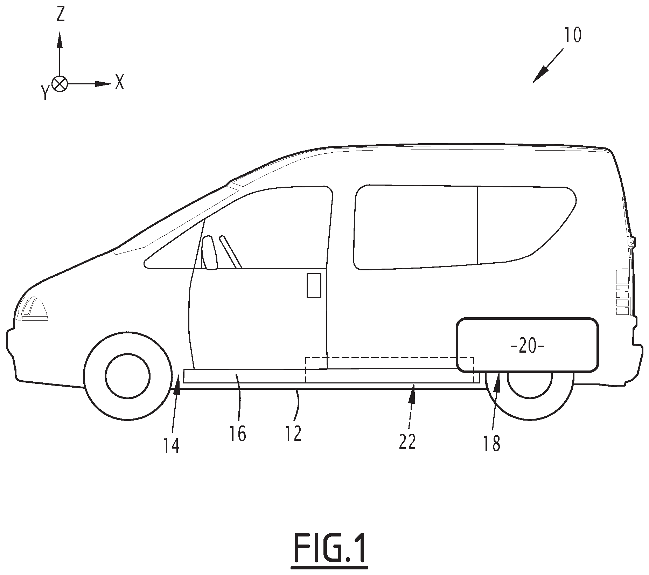

La Figure 1 montre un véhicule 10 selon l'invention.

Le véhicule 10 est par exemple un véhicule automobile, en particulier un véhicule utilitaire, notamment un véhicule utilitaire léger.

En particulier, le véhicule 10 est destiné au transport de marchandises, telles que des colis, et/ou de passagers.

Le véhicule 10 est par exemple une camionnette, comme illustré sur la Figure 1.

Le véhicule 10 est de préférence un véhicule électrique.

Pour des raisons de clarté, on définit un repère orthonormé XYZ comprenant une direction longitudinale X, une direction transversale Y et une direction verticale Z. La direction longitudinale X s'étend selon l'axe d'avancement du véhicule 10 et correspond à un axe avant-arrière du véhicule 10. La direction transversale Y est perpendiculaire à la direction longitudinale X et correspond à un axe gauche-droite du véhicule 10. La direction verticale Z est perpendiculaire à la direction longitudinale X et à la direction transversale Y et correspond à un axe bas-haut du véhicule 10.

Les termes « haut » et « bas » sont définis par rapport à la direction verticale Z correspondant à la hauteur du véhicule. Les termes « gauche », « droite », « avant » et « arrière » sont définis par rapport au sens de la direction d'avancement usuel du véhicule.

Par exemple, le véhicule 10 comprend un châssis 12 et une caisse 14 fixée sur le châssis 12.

La caisse 14 comprend par exemple une pluralité de pièces structurelles 16, telles qu'un plancher, des montants ou des panneaux de carrosserie par exemple.

De préférence, le véhicule 10 comprend un groupe motopropulseur 18, par exemple agencé à l'arrière du véhicule 10.

En particulier, le groupe motopropulseur 18 comprend par exemple un moteur 20, notamment électrique.

Le véhicule 10 comprend un agencement 22 selon l'invention.

L'agencement 22 comprend une batterie de traction 24, un élément structurel 26 et au moins un boulon 28 de fixation et de mise à la masse de la batterie de traction 24.

Par exemple, l'agencement 22 est arrangé en une partie inférieure du véhicule 10.

La batterie de traction 24 est de préférence adaptée pour stocker l'énergie nécessaire pour alimenter le moteur 20.

En particulier, la batterie de traction 24 fait notamment partie de la chaine de traction du véhicule 10.

La batterie de traction 24 présente par exemple une tension aux bornes de 800 V.

La batterie de traction 24 comprend un carter métallique 30 et de préférence une pluralité de modules 32, notamment assemblés dans ledit carter 30.

Chaque module 32 comprend par exemple une pluralité de cellules électrochimiques.

Par exemple, le carter métallique 30 définit une enceinte de protection dans laquelle sont logés les modules 32.

Le carter métallique 30 est par exemple fabriqué en aluminium, et notamment en aluminium non revêtu.

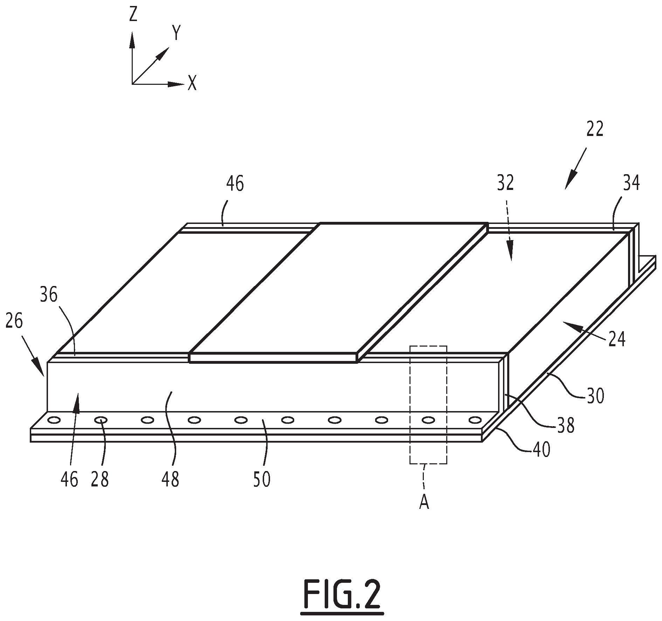

Comme cela est visible sur la Figure 2, le carter 30 comprend, par exemple, un côté droit 34 et un côté gauche 36, en particulier opposés selon la direction transversale Y.

Par exemple, chacun des côtés droit 34 et gauche 36 comprend une portion plane 38, en particulier verticale, et un support horizontal 40 s'étendant en saillie externe transversale de la portion plane 38.

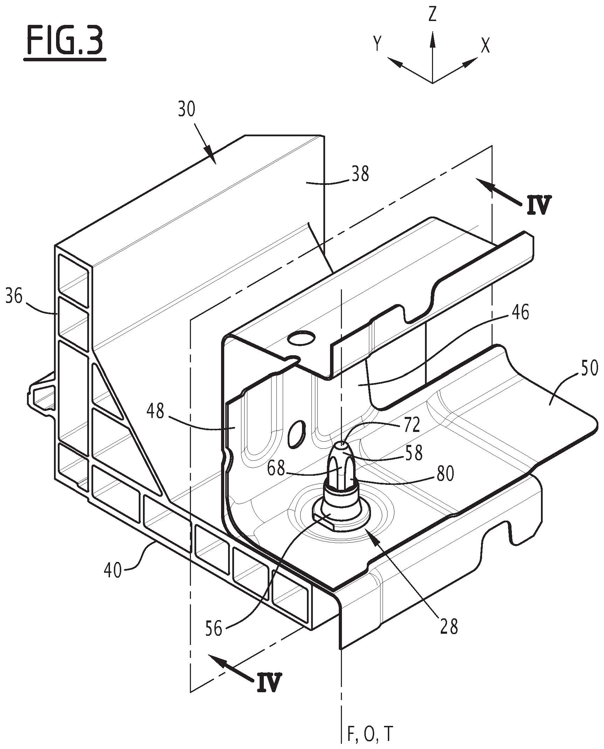

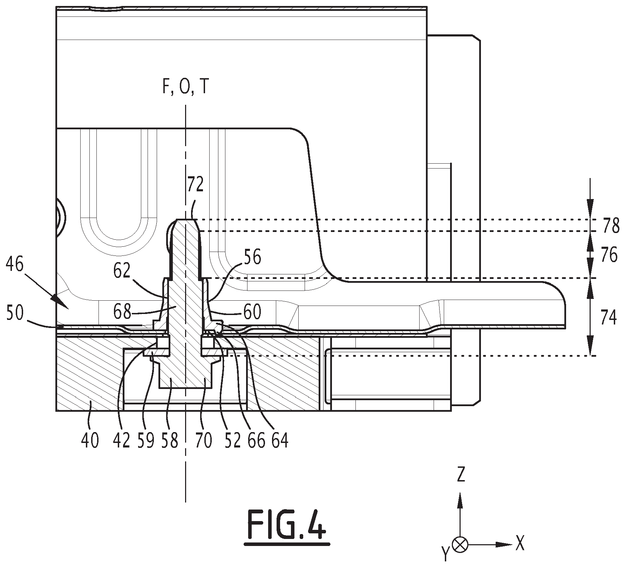

Les Figures 3 et 4 illustrent un exemple de réalisation particulier d'une partie du côté gauche 36 du carter 30, notamment qui est dans la zone A définie sur la Figure 2.

Comme cela est visible sur les Figures, le carter 30 comprend au moins un premier orifice de fixation 42, et de préférence une pluralité de premiers orifices de fixation 42.

Chaque premier orifice de fixation 42 est, en particulier, défini sur le côté droit 34 ou le côté gauche 36 du carter 30, et de préférence est ménagé sur le support horizontal 40 correspondant comme cela est visible sur la Figure 3.

De manière avantageuse, le carter 30 comprend au moins deux premiers orifices de fixation 42 par côté 34, 36, et de préférence au moins cinq premiers orifices de fixation 42 par côté 34, 36, et encore plus préférentiellement entre 6 et 12 premiers orifices de fixation 42 par côté 34, 36.

En particulier, sur chacun des deux côtés 34, 36, les premiers orifices de fixation 42 correspondants sont alignés entre eux notamment selon la direction longitudinale X.

Plus précisément, les premiers orifices de fixation 42 définissent, sur chacun des deux côtés 34, 36, une rangée longitudinale, notamment définie sur le support horizontal 40 correspondant.

De préférence, sur chacun des côtés 34, 36, les premiers orifices de fixation 42 sont répartis sur une même rangée longitudinale, par exemple de manière uniforme, c'est à dire à équidistance les uns des autres, ou à différents intervalles entre eux.

Les premiers orifices de fixation 42 sont par exemple tous identiques les uns des autres.

Chacun des premiers orifices de fixation 42 est centré sur un axe de fixation F.

L'axe de fixation F de chaque premier orifice de fixation 42 est notamment perpendiculaire à la direction transversale Y, et plus précisément parallèle à la direction verticale Z, comme cela est visible sur les Figures 3 et 4.

Chaque premier orifice de fixation 42 est notamment un orifice traversant, comme cela est visible sur la Figure 4.

Par exemple, chaque premier orifice de fixation 42 est circulaire.

Plus précisément, chaque premier orifice de fixation 42 présente un diamètre compris entre 8 mm et 15 mm, et encore plus précisément entre 10 mm et 14 mm.

L'élément structurel 26 fait notamment partie de la caisse 14 du véhicule 10.

Plus précisément, l'élément structurel 26 comprend au moins une pièce 46 choisie parmi les pièces structurelles 16 de la caisse 14, comme cela est visible sur la Figure 2.

Dans l'exemple illustré sur la Figure 2, l'élément structurel 26 comprend deux pièces 46.

En particulier, l'élément structurel 26 comprend par exemple une pièce droite en regard du côté droit 34 du carter 30 et une pièce gauche en regard du côté gauche 36 du carter 30.

Les Figures 3 et 4 illustrent un exemple de réalisation particulier d'une partie d'une de la pièce gauche 46 de l'élément structurel 26 en regard du côté gauche 36 du carter 30, au niveau de la zone A de la Figure 2.

Par exemple, dans le mode réalisation particulier illustré sur les Figures, chaque pièce 46 de l'élément structurel 26 comprend une portion verticale 48, notamment s'étendant selon la direction verticale Z, et une portion horizontale 50 s'étendant en saillie externe transversale de la portion verticale 48.

En particulier, la portion horizontale 50 de la pièce 46 est en regard de, et plus précisément contre, le support horizontal 40 du côté 34, 36 correspondant du carter 30.

Par exemple, chacune des pièces 46 est formée par la superposition de deux tôles, comme cela est visible sur les Figures 3 et 4.

L'élément structurel 26, et plus précisément chacune des pièces 46, est métallique et revêtu par une couche de revêtement.

L'élément structurel 26, et plus précisément chacune des pièces 46, est fabriqué par exemple en acier.

La couche de revêtement est par exemple une couche isolante électriquement, en particulier une couche de peinture, notamment déposée par cataphorèse.

L'élément structurel 26 comprend au moins un deuxième orifice de fixation 52, et de préférence une pluralité de deuxièmes orifices de fixation 52.

Chaque deuxième orifice de fixation 52 de l'élément structurel 26 est, en particulier, ménagé dans l'une des pièces 46 de l'élément structurel 26, et notamment dans la portion horizontale 50 correspondante.

De manière avantageuse, l'élément structurel 26 comprend un deuxième orifice de fixation 52 correspondant pour chaque premier orifice de fixation 42 du carter 30.

Plus précisément, chaque deuxième orifice de fixation 52 de l'élément structurel 26 s'étend en regard de l'un des premiers orifices de fixation 42 du carter 30
Par exemple, l'élément structurel 26 comprenant le même nombre d'orifices de fixation 52 que le carter 30, et notamment au moins deux deuxièmes orifices de fixation 52 par pièces 46, et de préférence au moins cinq deuxièmes orifices de fixation 52 par pièces 46, et encore plus préférentiellement entre 6 et 12 deuxièmes orifices de fixation 52 par pièces 46.

En particulier, sur chacune des deux pièces 46, les deuxièmes orifices de fixation 52 correspondants sont alignés entre eux notamment selon la direction longitudinale X.

Plus précisément, les deuxièmes orifices de fixation 52 définissent, sur chacune des deux pièces 46, une rangée longitudinale, notamment définie sur la portion horizontale 50 correspondante.

De préférence, les deuxièmes orifices de fixation 52 sont répartis sur une même rangée longitudinale, par exemple de manière uniforme, c'est à dire à équidistance les uns des autres, ou à différents intervalles entre eux. Les deuxièmes orifices de fixation 52 sont par exemple tous identiques les uns des autres.

Chacun des deuxièmes orifices de fixation 52 de l'élément structurel 26 est centré sur un axe d'orifice O, notamment confondu avec l'axe de fixation F du premier orifice de fixation 42 correspondant du carter 30.

L'axe d'orifice O de chaque deuxième orifice de fixation 52 est notamment perpendiculaire à la direction transversale Y, et plus précisément parallèle à la direction verticale Z, comme cela est visible sures Figures 2 à 4.

Chaque deuxième orifice de fixation 52 de l'élément structurel 26 est notamment un orifice traversant, comme cela est visible sur la Figure 4.

Par exemple, chaque deuxième orifice de fixation 52 est circulaire.

Plus précisément, chaque deuxième orifice de fixation 52 présente un diamètre compris entre 8 mm et 15 mm, et encore plus précisément entre 10 mm et 14 mm.

L'agencement 22 comprend au moins un boulon 28 de fixation et de mise à la masse de la batterie de traction 24, et de préférence une pluralité de boulons 28.

Par exemple, l'agencement 22 comprend au moins quatre boulons 28, et de préférence au moins 10 boulons 28, et encore plus préférentiellement entre 12 et 24 boulons 28.

Plus précisément, l'agencement 22 comprend un boulon 28 correspondant pour chaque premier orifice de fixation 42 du carter 30, et en particulier pour chaque paire formée par l'un des premiers orifices de fixation 42 du carter 30 et le deuxième orifice de fixation 52 correspondant de l'élément structurel 26.

Chaque boulon 28 est en particulier configuré pour fixer la batterie de traction 24, et en particulier son carter 30, à l'élément structurel 26.

Plus précisément, chaque boulon 28 fixe ensemble l'un des côtés 34, 36 du carter 30 à la pièce 46 correspondante de l'élément structurel 26, notamment en connectant la paire formée par l'un des premiers orifices de fixation 42 du carter 30 et le deuxième orifice de fixation 52 correspondant de l'élément structurel 26.

Encore plus précisément, comme cela est visible sur les Figures 3 et 4, chaque boulon 28 fixe ensemble le support horizontal 40 de l'un des côtés 34, 36 du carter 30 à la portion horizontale 50 de la pièce 46 correspondante de l'élément structurel 26.

Chaque boulon 28 est également configuré pour mettre à la masse la batterie de traction 24.

En particulier, comme cela sera expliqué plus en détails par la suite, chaque boulon 28 est configuré pour définir, notamment par l'intermédiaire de l'élément structurel 26, une connexion électrique entre la batterie de traction 24 et la masse, en particulier un potentiel de référence.

Chaque boulon 28 comprend un écrou 56 et une vis 58.

Chaque boulon 28 comprend par exemple également une rondelle 59.

L'écrou 56 est centré sur l'axe de fixation F correspondant.

Plus précisément, de manière classique, l'écrou 56 comprend une couronne 60 avec un trou central taraudé 62, c'est-à-dire muni d'un filetage interne.

Le trou central taraudé 62 est notamment centré sur l'axe de fixation F correspondant.

La couronne 60 présente par exemple une section transversale tronconique, comme cela est visible sur la Figure 4.

De préférence, la couronne 60 comprend également une collerette 64, en particulier en une partie inférieure de l'écrou 56.

L'écrou 56 est fabriqué en un matériau métallique, tel que de l'acier par exemple.

L'écrou 56 a été soudé à l'élément structurel 26 préalablement à l'application de la couche de revêtement.

Plus précisément, l'écrou 56, et notamment la collerette 64 de la couronne 60, a été soudé à la pièce 46 correspondante, et notamment à sa portion horizontale 50, avant le dépôt de la couche de revêtement.

Par exemple, l'écrou 56 a été soudé à la pièce 46 par une soudure métal à métal, par notamment par une soudure par résistance.

Cette soudure de l'écrou 56 sur la pièce 46 avant l'application de la couche de revêtement définit en particulier un cordon de soudure 66 métallique reliant les deux éléments, comme cela est visible sur la Figure 4.

La vis 58 de chaque boulon 28 est configurée pour coopérer avec l'écrou 56 correspondant.

La vis 58 de chaque boulon 28 est par exemple métallique, notamment en acier.

Avantageusement, chaque vis 58 est revêtue par un revêtement conducteur, en particulier pour renforcer la conductivité électrique de ladite vis 58.

Le revêtement conducteur est par exemple un revêtement anticorrosion avec des propriétés de conduction électriques élevées.

La ou chaque vis 58 est, plus particulièrement, une vis de dimension M10 à M14.

La vis 58 de chaque boulon 28 comprend une tige 68 et une tête 70.

La tige 68 s'étend selon un axe de tige T, notamment entre la tête 70 et une extrémité libre 72.

L'axe de tige T est de préférence confondu avec l'axe de fixation F correspondant.

La tige 68 présente, en particulier, un diamètre correspondant sensiblement au diamètre du trou 62 de l'écrou 56.

Par exemple, dans le cas où la vis 58 est une vis de dimension M10 à M14, la tige 68 présente un diamètre compris entre 10 mm et 14 mm.

La tige 68 de chaque vis 58 comprend une portion de fixation 74 et une portion de nettoyage 76.

De préférence, la tige 68 de chaque vis 58 comprend également un bout 78, par exemple un bout tronconique ou un bout pilote cylindrique.

La tige 68 de chaque vis 58 est de préférence divisée selon l'axe de tige T entre la portion de fixation 74, la portion de nettoyage 76 et le bout 78 ; la portion de nettoyage 76 s'étendant entre la portion de fixation 74 et le bout 78.

La portion de fixation 74 s'étend selon l'axe de tige T entre la tête 70 et la portion de nettoyage 76.

Comme cela est visible sur la Figure 4, la portion de fixation 74 de la tige 68 de chaque vis 58 s'étend en particulier dans le premier orifice de fixation 42 correspondant, dans le deuxième orifice de fixation 52 correspondant et dans l'écrou 56, notamment dans le trou taraudé 62.

La portion de fixation 74 de la tige 68 présente par exemple un filetage externe coopérant avec le filetage interne du trou taraudé 62 de l'écrou 56.

Comme cela est visible sur la Figure 4, la portion de nettoyage 76 de la tige 68 de chaque vis 58 s'étend par exemple selon l'axe de tige T entre la portion de nettoyage 76 et le bout 78.

De préférence, la portion de nettoyage 76 de la tige 68 de chaque vis 58 s'étend au moins partiellement hors de l'écrou 56.

La portion de nettoyage 76 de la tige 68 présente par exemple une longueur, mesurée selon l'axe de tige T, comprise entre 5 mm et 15 mm, et de préférence entre 8 mm et 12 mm.

Chaque portion de nettoyage 76 comprend au moins deux rainures 80 définies axialement selon l'axe de tige T.

Chaque portion de nettoyage 76 comprend au moins quatre rainures 80, de préférence reparties de manière circulaire uniforme autour de l'axe de tige T.

Dans le mode de réalisation particulier de la Figure 3, la portion de nettoyage 76 comprend quatre rainures 80 espacées de 90° les unes des autres.

Chaque rainure 80 est notamment ménagée sur la portion de nettoyage 76, en particulier sur toute la longueur de celle-ci.

Plus précisément, chaque rainure 80 définit un évidement dans la portion de nettoyage 76. En particulier, le diamètre de la portion de nettoyage 76 est plus faible au niveau de chaque rainure 80.

De préférence, chaque rainure 80 présente une section, notamment prise dans un plan XY, en forme d'arc de cercle. Alternativement, chaque rainure 80 définit un méplat.

Dans le mode de réalisation illustré sur la Figure 3, les rainures 80 sont rectilignes, et notamment s'étendent parallèlement à l'axe de tige T.

Alternativement, les rainures 80 s'étendent de manière hélicoïdale partielle, c'est-à-dire de manière inclinée mais pas sur une circonférence complète de la tige 68.

Le bout 78 s'étend notamment entre la portion de nettoyage 76 et l'extrémité libre 72.

La bout 78 est par exemple un bout tronconique ou bout pilote cylindrique.

Un procédé de fixation et de mise à la masse d'une batterie de traction 24 dans un véhicule 10 va maintenant être décrit.

Le procédé comprend une étape a) de fourniture d'une batterie de traction 24, en particulier une batterie de traction 24 telle que décrite ci-dessus.

Plus particulièrement, la batterie de traction 24 fournie comprend un carter 30 métallique.

Le carter 30 comprend au moins un premier orifice de fixation 42 centré sur un axe de fixation F, et de préférence une pluralité de premiers orifices de fixation 42 tels que décrits ci-dessus.

Le procédé comprend également une étape b) de fourniture d'un élément structurel 26, en particulier un élément structurel 26 métallique tel que décrit ci-dessus.

Par exemple, l'élément structurel 26 comprend au moins une pièce métallique 46, notamment telle que décrite ci-dessus.

En particulier, lors de cette étape b), l'élément structurel 26 n'est recouvert par aucune couche de revêtement.

L'élément structurel 26 comprend au moins un deuxième orifice de fixation 52 centré sur un axe d'orifice O, et de préférence une pluralité de deuxièmes orifice de fixation 52 tels que décrits ci-dessus.

De préférence, l'élément structurel 26 comprenant le même nombre d'orifices de fixation 52 que le carter 30.

Le procédé comprend, en outre, une étape c) de fourniture d'un boulon 28, en particulier un boulon 28 tel que décrit ci-dessus.

De préférence, l'étape c) comprend la fourniture d'une pluralité de boulons 28, et notamment d'un boulon 28 par premier orifice de fixation 42.

Comme cela est décrit ci-dessus, chaque boulon 28 fourni comprend notamment un écrou 56 et une vis 58.

Chaque vis 58 fournie comprend en particulier une tige 68 s'étendant selon un axe de T et comprenant une portion de fixation 74 et une portion de nettoyage 76 avec au moins deux rainures 80 telles que décrites ci-dessus.

Le procédé comprend ensuite une étape d) de soudure de chaque écrou 56 sur l'élément structurel 26, et en particulier de sorte à centrer celui-ci sur l'axe d'orifice O du deuxième orifice 52 de fixation correspondant.

Plus précisément, l'écrou 56 est soudé à la pièce 46 correspondante.

Encore plus précisément, la collerette 64 de la couronne 60 de chaque écrou 56 est soudée sur la portion horizontale 50 de la pièce 46 correspondante.

De préférence, après la soudure, le trou central taraudé 62 de l'écrou 56 est centré sur l'axe d'orifice O du deuxième orifice de fixation 52.

L'étape d) est réalisée par une soudure métal à métal.

Avantageusement, notamment en raison de sa grande reproductibilité et de sa simplicité, l'étape d) est réalisée par soudure par résistance.

En particulier, lors de la soudure de chaque écrou 56 sur l'élément structurel 26, un cordon de soudure 66 métallique est formé.

Le procédé comprend ensuite une étape e) d'application d'une couche de revêtement, en particulier d'une couche de peinture, sur l'élément structurel 26 et le ou les écrou(s) 56.

Par exemple, la couche de revêtement est appliquée sur la ou chacune des pièces 46 et également sur la ou chacun des écrous 56 soudés sur lesdites pièces 46.

Avantageusement, notamment en raison de l'uniformité et la qualité du dépôt, l'étape e) est réalisée par cataphorèse.

Puis, le procédé comprend une étape f) d'agencement du carter 30 de la batterie de traction 24, en particulier de sorte que l'axe de fixation F de chaque premier orifice de fixation 42 soit confondu avec l'axe d'orifice O du deuxième orifice de fixation 52 correspondant de l'élément structurel 26.

Le procédé comprend ensuite une étape g) de vissage de chaque vis 58 dans l'écrou 56 correspondant.

Lors de cette étape de vissage, l'extrémité libre 72, et notamment le bout 78, de la tige 68 est par exemple tout d'abord insérée dans le trou 62 de l'écrou 56, selon l'axe de fixation F.

Ensuite, la portion de nettoyage 76 est insérée, et notamment vissée, dans l'écrou 56. Lors dudit vissage, grâce aux rainures 80, les dépôts de couche de revêtement dans le trou 62 de l'écrou sont avantageusement évacués.

Suite à ce vissage, la portion de fixation 74 de la tige 68 de la vis s'étend par exemple dans le premier orifice de fixation 42, dans le deuxième orifice de fixation 52 correspondant et dans l'écrou 56 correspondant.

Notamment, la portion de fixation 74 et le trou 62 sont de préférence en contact métal-métal entre eux, grâce aux nettoyage du trou 62 par la portion de nettoyage 76.

Ainsi, suite à un tel procédé, la batterie de traction 24 est fixée sur l'élément structurel 26 par le ou les boulons 28.

Par ailleurs, suite à un tel procédé, la batterie de traction 24 est mise à la masse.

En particulier, chaque boulon 28 définit, notamment par l'intermédiaire de l'élément structurel 26, une connexion électrique entre la batterie de traction 24 à la masse, en particulier un potentiel de référence.

Plus précisément, le courant électrique passe de la batterie de traction 24 à la vis 58 métallique, puis dans l'écrou 56 correspondant et ensuite dans l'élément structurel 26, notamment par le cordon de soudure métallique 66. L'élément structurel 26 étant un élément de caisse, celui-ci permet ainsi la mise à la masse de la batterie de traction 24.

Le ou les boulons 28 joue(nt) ainsi à la fois un rôle de fixation et également un rôle de mise à la masse de la batterie de traction 24.

Ainsi, ceux-ci permettent de se passer de l'utilisation d'un câble avec une surlongeur pour la mise à masse et ses désavantages associés.

L'agencement 22 selon l'invention est donc particulièrement avantageux, en ce qu'il est économique et garantit un assemblage ergonomique.

Par ailleurs, de par la double-fonctionnalité du ou des boulons 28, un tel agencement présente notamment un nombre de pièces réduit.

En outre, la définition des rainures 80 dans la portion de nettoyage 76 de chaque vis 58 assure une évacuation satisfaisante de la couche de revêtement dans l'écrou 56, et ainsi une conductivité électrique optimale entre l'écrou 56 et la vis 58.

L'agencement 22 avec une pluralité de boulons 28 permet une redondance de la fixation et de la mise à masse, ce qui permet d'assurer une mise à la masse de la batterie de traction 24 même si une partie des boulons 28 est détruite, notamment suite à un choc accidentel.

Cette redondance assure une plus grande fiabilité de l'agencement 22 et donc une plus grande sécurité.

## Revendications

1. Agencement (22) pour véhicule (10), notamment pour véhicule automobile et en particulier électrique, comprenant :
- une batterie de traction (24) comprenant un carter (30) métallique, le carter (30) comprenant au moins un premier orifice de fixation (42) centré sur un axe de fixation (F),
- un élément structurel (26) comprenant au moins un deuxième orifice de fixation (52) centré sur un axe d'orifice (O) confondu avec l'axe de fixation (F) correspondant, l'élément structurel (26) étant métallique et revêtu par une couche de revêtement, en particulier une couche de peinture, et
- au moins un boulon (28) de fixation et de mise à la masse de la batterie de traction (24), le boulon (28) comprenant :
∘ un écrou (56) centré sur l'axe de fixation (F) correspondant et ayant été soudé sur l'élément structurel (26) préalablement à l'application de la couche de revêtement, et
∘ un vis (58) comprenant une tête (70) et une tige (68) s'étendant selon un axe de tige (T) confondu avec l'axe de fixation (F), la tige (68) comprenant une portion de fixation (74) et une portion de nettoyage (76),
la portion de fixation (74) de la tige (68) s'étendant selon l'axe de tige (T) entre la tête (70) et la portion de nettoyage (76),
la portion de nettoyage (76) comprenant au moins deux rainures (80) définies axialement selon l'axe de tige (T).

2. Agencement (22) selon la revendication 1, dans lequel le carter (30) comprend un côté droit (34) et un côté gauche (36) opposés selon une direction transversale (Y), le carter (30) comprenant au moins deux premiers orifices de fixation (42) par côté (34, 36), et de préférence au moins cinq premiers orifices de fixation (42) par côté (34, 36), chaque premier orifice de fixation (42) définissant un axe de fixation (F) correspondant, en particulier perpendiculaire à la direction transversale (Y),
l'élément structurel (26) comprenant un deuxième orifice de fixation (52) correspondant pour chacun des premiers orifices de fixation (42),
l'agencement (22) comprenant un boulon (28) correspondant pour chaque premier orifice de fixation (42).

3. Agencement (22) selon la revendication 1 ou 2, dans lequel la ou chaque vis (58) est revêtue par un revêtement conducteur.

4. Agencement (22) selon l'une quelconque des revendications précédentes, dans lequel les rainures (80) de la portion de nettoyage (76) sont rectilignes et notamment s'étendent parallèlement à l'axe de tige (T).

5. Agencement (22) selon l'une quelconque des revendications précédentes, dans lequel la ou chaque portion de nettoyage (76) comprend au moins quatre rainures (80), de préférence reparties de manière circulaire uniforme autour de l'axe de tige (T).

6. Agencement (22) selon l'une quelconque des revendications précédentes, dans lequel la ou chaque vis (58) est une vis de dimension M10 à M14.

7. Véhicule (10), notamment véhicule automobile et en particulier véhicule électrique, comprenant un agencement (22) selon l'une quelconque des revendications précédentes.

8. Procédé de fixation et de mise à la masse d'une batterie de traction (24) dans un véhicule (10), le procédé comprenant les étapes suivantes :
a. fourniture d'une batterie de traction (24) comprenant un carter (30) métallique, le carter (30) comprenant au moins un premier orifice de fixation (42) centré sur un axe de fixation (F),
b. fourniture d'un élément structurel (26) comprenant au moins un deuxième orifice de fixation (52) centré sur un axe d'orifice (O), l'élément structurel (26) étant métallique,
c. fourniture d'au moins un boulon (28) comprenant un écrou (56) et une vis (58), la vis (58) comprenant une tige (68) s'étendant selon un axe de tige (T) et comprenant une portion de fixation (74) et une portion de nettoyage (76) comprenant au moins deux rainures (80) définies axialement selon l'axe de tige (T),
d. soudure de l'écrou (56) sur l'élément structurel (26) de sorte à centrer celui-ci sur l'axe d'orifice du deuxième orifice de fixation (52) correspondant,
e. application de la couche de revêtement, en particulier une couche de peinture, sur l'élément structurel (26) et l'écrou (56),
f. agencement du carter (30) de sorte que l'axe de fixation (F) du ou de chaque premier orifice de fixation (42) soit confondu avec l'axe d'orifice (O) du deuxième orifice de fixation (52) correspondant de l'élément structurel (26), et
g. vissage de la ou chaque vis (58) dans l'écrou (56) correspondant.

9. Procédé selon la revendication 8, dans lequel l'étape e) est réalisée par cataphorèse.

10. Procédé selon la revendication 8 ou 9, dans lequel l'étape d) est réalisée par soudure par résistance.
